# EUROPÄISCHE PATENTSCHRIFT

(11) **EP 1 808 350 B1**
(45) Veröffentlichungstag und Bekanntmachung des Hinweises auf die Patenterteilung: **30.07.2008**
(21) Anmeldenummer: 07000470.0
(22) Anmeldetag: 10.01.2007
(51) Int. Cl.: B60W 30/12, B60W 30/14

(54) **Verfahren zum Betrieb eines Längsführungssystems in einem Kraftfahrzeug**
Procedure for operating a longitudinal guiding system in a motor vehicle
Procédure pour le contrôle d'un système de guidage longitudinal pour automobile

(30) Priorität: 13.01.2006 DE 102006001710
(43) Veröffentlichungstag der Anmeldung: 18.07.2007
(73) Patentinhaber: AUDI AG, 85045 Ingolstadt (DE)
(72) Erfinder: Freyer, Jörn, 81827 München (DE); Siedersberger, Karl-Heinz, 85049 Ingolstadt (DE); Held, Ralf, 85072 Eichstätt (DE)
(74) Vertreter: Thielmann, Frank

(56) Entgegenhaltungen:
- EP-A- 1 235 052
- EP-A- 1 602 542
- DE-A1- 10 205 225
- US-A1- 2006 009 910
- ITOH M ET AL: "Towards intelligent navigator that can provide timely advice on safe and efficient driving" INTELLIGENT TRANSPORTATION SYSTEMS, 1999. PROCEEDINGS. 1999 IEEE/IEEJ/JSAI INTERNATIONAL CONFERENCE ON TOKYO, JAPAN 5-8 OCT. 1999, PISCATAWAY, NJ, USA,IEEE, US, 5. Oktober 1999 (1999-10-05), Seiten 981-986, XP010369927 ISBN: 0-7803-4975-X
- MIURA J ET AL: "A three-level control architecture for autonomous vehicle driving in a dynamic and uncertain traffic environment" INTELLIGENT TRANSPORTATION SYSTEM, 1997. ITSC '97., IEEE CONFERENCE ON BOSTON, MA, USA 9-12 NOV. 1997, NEW YORK, NY, USA,IEEE, US, 9. November 1997 (1997-11-09), Seiten 706-711, XP010270897 ISBN: 0-7803-4269-0

## Beschreibung

Die Erfindung betrifft ein Verfahren zum Betrieb eines Längsführungssystems in einem Kraftfahrzeug sowie ein Kraftfahrzeug mit einem Längsführungssystem, das zur Durchführung des Verfahrens ausgebildet ist.

Längsführungssysteme sind eine Erweiterung einer Geschwindigkeitsregelanlage und sorgen innerhalb ihrer Systemgrenzen für den richtigen Abstand zu einem vorausfahrenden, anderen Verkehrsteilnehmer. Dabei wird im Rahmen dieses Fahrerassistenzsystems durch langreichweitige Radarsensoren der Abstand zu einem vorausfahrenden Fahrzeug bestimmt. Wird der Abstand zu gering, verringert das System moderat durch Gas wegnehmen die Geschwindigkeit oder es löst ein automatisches Betätigen der Bremse aus. Wird die Strecke wieder freie, beschleunigt das Längsführungssystem das Fahrzeug wieder auf die zuvor eingestellte Geschwindigkeit. Ein prominentes Beispiel für ein Längsführungssystem ist "adaptive cruise control" (ACC).

Heutige Längsführungssysteme arbeiten meist lediglich auf Basis eines oder mehrerer Sensoren zur Objekterkennung, vorzugsweise der oben schon erwähnten langreichweitigen Radarsensoren. Dabei kann es insbesondere bei Spurwechseln zu Problemen kommen, da die Betriebsparameter des Längsführungssystems beispielsweise bei Annäherung an ein vorausfahrendes Fahrzeug gerade von einem Bremsvorgang ausgehen, der Fahrer jedoch zum Einleiten des Spurwechselvorganges beschleunigen möchte. Dabei kann ein Ruckeln des Fahrzeugs, beziehungsweise eine Verzögerung, bevor das Fahrzeug beschleunigen kann, auftreten. Dieses Verhalten des Längsführungssystems wirkt sich somit nachteilig sowohl auf den Fahrkomfort als auch auf die Fahrdynamik aus.

Eine weitere Problemstelle bilden Ein- beziehungsweise Auffahrten, bei denen eine Vielzahl von Fahrzeugen auf die Fahrspur des eigenen Kraftfahrzeugs wechseln. Hierbei kann es leicht zu einem kritischen Naheinscheren beim Betrieb des Längsführungssystems kommen.

Die DE 102 05 225 A1 schlägt ein Verfahren und eine Vorrichtung zum Erkennen eines bereits eingeleiteten Spurwechsels im Rahmen eines Fahrgeschwindigkeitsregelsystems vor. Als Parameter werden dabei beispielsweise fahrdynamische Signale, z.B. der Lenkwinkel oder die Querbeschleunigung, oder Fahrerbediensignale, z.B. das Setzen der Fahrtrichtungsanzeige, wie auch Daten aus einem Navigationssystem bezüglich der absoluten Position des Kraftfahrzeugs innerhalb der aktuellen Fahrspur verwendet. Daraus wird die Wahrscheinlichkeit für einen eingeleiteten Spurwechsel bestimmt. Ist ein solcher detektiert worden, so werden die Betriebsparameter des Längsführungssystems entsprechend angepasst. Zu einem solchen Zeitpunkt, zu dem der Spurwechsel bereits begonnen ist, ist eine signifikante Verbesserung der Fahreigenschaften nicht mehr möglich.

US-A1-2006/009910, als nächstliegender Stand der Technik betrachtet, zeigt ein Verfahren zum Betrieb eines Längsführungssystems in einem Kraftfahrzeug, bei dem ein erster Rechenwert, der ein Maß für die Wahrscheinlichkeit eines vom Fahrer beabsichtigten Spurwechsels ist, aus ersten, von Erfassungsmitteln bestimmten Parametern, die Informationen über den Betriebszustand des Fahrzeugs, bestimmt wird, wobei die Möglichkeit eines Spurwechselvorgangs, aus zweiten, von Erfassungsmitteln bestimmten Parametern die Informationen über seine Umgebung enthalten, bestimmt wird, wonach bei Erfassen eines eingeleiteten Spurwechsels die Betriebsparameter des Längsführungssystems unter Berücksichtigung der in den vorangehenden Schritten ermittelten Informationen angepasst werden.

Der Erfindung liegt daher die Aufgabe zugrunde, ein Verfahren zum Betrieb eines Längsführungssystems zu schaffen, mit Hilfe dessen die Betriebsparameter des Längsführungssystems in kritischen Fahrsituationen, insbesondere bei Spurwechseln, besser auf die Situation anpassbar sind, um damit die Leistung und die Transparenz des Systems für den Fahrer vorteilhafter zu gestalten.

Zur Lösung dieser Aufgabe ist bei einem Verfahren der eingangs genannten Art erfindungsgemäß vorgesehen, dass fortlaufend ein erster Rechenwert, der ein Maß für die Wahrscheinlichkeit eines vom Fahrer beabsichtigten Spurwechsels ist, aus ersten, von Erfassungsmitteln bestimmten Parametern, die Informationen über den Betriebszustand des Fahrzeugs und/oder seine Umgebung enthalten, bestimmt wird, wobei bei einem einen vorbestimmten Schwellwert überschreitenden ersten Rechenwert ein zweiter Rechenwert, der ein Maß für die Sicherheit eines möglichen Spurwechselvorgangs ist, aus zweiten, von Erfassungsmitteln bestimmten Parametern, die Informationen über den Betriebszustand des Fahrzeugs und/oder seine Umgebung enthalten, bestimmt wird, wonach bei Überschreitung eines Schwellwertes für den zweiten Rechenwert einem Fahrer die Möglichkeit eines Spurwechsels angezeigt wird, und wonach bei Erfassen eines eingeleiteten Spurwechsels die Betriebsparameter des Längsführungssystems unter Berücksichtigung der in den vorangehenden Schritten ermittelten Informationen angepasst werden.

Der vorliegenden Erfindung liegt die Erkenntnis zugrunde, dass von anderen Fahrzeugsystemen oder Komponenten, also Erfassungsmitteln, erfasste Parameter geeignet sind, einen Spurwechselwunsch des Fahrers weit vor dem eigentlich eingeleiteten Spurwechsel schon zu prädizieren. Dabei sind drei hauptsächliche Verfahrensschritte vorgesehen. Zunächst wird aus von Erfassungsmitteln bestimmten ersten Parametern ein erster Rechenwert berechnet, der letztendlich die Motivation des Fahrers für einen Spurwechsel angibt. Ab einer gewissen Wahrscheinlichkeit nutzt das System zweite Parameter, die ebenfalls Information über den Betriebszustand des Fahrzeugs und/oder seine Umgebung enthalten, um zu überprüfen, ob ein Spurwechsel auf eine sichere und gegebenenfalls komfortable Art und Weise im Moment möglich und zu empfehlen ist. Natürlich können auch Parameter aus der ersten Gruppe von Parametern in der zweiten Gruppe von Parametern enthalten sein. Ist ein Spurwechsel sicher und gegebenenfalls komfortabel möglich, wird der Fahrer unterstützt, indem ihm diese Option zur Anzeige gebracht wird. Durch diesen zweiten Schritt, Ermittlung der Möglichkeit eines Spurwechsels, sind dem Längsführungssystem nun auch die wichtigsten Informationen über den bevorstehenden Spurwechsel bereits bekannt. Schließlich wird in einem dritten Schritt aufgrund Kriterien wie der Betätigung des Fahrtrichtungsanzeigers, des Lenkwinkels, der Querbeschleunigung usw., detektiert, ob tatsächlich ein Spurwechsel durchgeführt wird. Die Betriebsparameter des Längsführungssystems werden nun unter Berücksichtigung der in den vorangehenden Schritten ermittelten Informationen optimal auf den bevorstehenden Spurwechselvorgang angepasst. Das Längsführungssystem erhält also durch das erfindungsgemäße Verfahren eine Vielzahl zusätzlicher Informationen über die allgemeine Verkehrssituation und den bevorstehenden Spurwechsel, die eine verbesserte Optimierung seiner Betriebsparameter und damit eine ideale Fahrdynamik und einen idealen Fahrkomfort ohne Ruckeln oder unverständliche Leistungsschwankungen/Bremsmanöver während des Spurwechsels erlauben. Zusätzlich wird während des Vorgangs aufgrund der Informationen dem Fahrer vorteilhafterweise mitgeteilt, ob ein sicherer und gegebenenfalls komfortabler Spurwechsel aufgrund der momentanen Verkehrslage möglich und zu empfehlen ist.

Mit besonderem Vorteil können zumindest ein Teil der Erfassungsmittel Teil anderer Fahrerassistenzsysteme, insbesondere eines Navigationssystems und/oder eines Spurwechselassistenzsystems und/oder eines Systems zur Warnung bei Verlassen der Fahrspur, sein. Andere Fahrerassistenzsysteme, die zudem andere Erfassungsmittel beziehungsweise Sensoren zur Verfügung haben, sammeln meist, auch wenn sie selber augenblicklich nicht verwendet werden, Informationen in Form von Parametern, die zur Bestimmung der Spurwechselabsicht und des Spurwechselverhaltens wertvolle Beiträge liefern können. Erfindungsgemäß wird nun vorteilhafterweise vorgeschlagen, eine Kommunikation des Längsführungssystems mit diesen anderen Fahrerassistenzsystemen zu ermöglichen, so dass auf deren Daten zugegriffen werden kann. So kann beispielsweise mit Hilfe eines Navigationssystems die Straßenart und gegebenenfalls der Wegfall einer Spur bestimmt werden. Ein System zur Warnung bei Verlassen der Fahrspur (oft auch "Lane Departure Warning" genannt) liefert Informationen zur Position des eigenen Kraftfahrzeugs innerhalb der Fahrspur oder auch über den weiteren Verlauf der Fahrspuren. Als besonders nützlich im Rahmen des erfindungsgemäßen Verfahrens hat sich die Verwendung der Daten eines Spurwechselassistenzsystems erwiesen. Die Informationen des Spurwechselassistenten gehen als Parameter in das erfindungsgemäße Verfahren selbst dann ein, wenn der Spurwechselassistent selber diese nicht nutzt.

Die ersten Parameter können die Geschwindigkeit des Fahrzeuges und/oder die Geschwindigkeit eines vorausfahrenden Fahrzeuges und/oder der Abstand zu dem vorausfahrenden Fahrzeug und/oder die Zeitlücke zu dem vorausfahrenden Fahrzeug und/oder die zeitliche Änderung der Zeitlücke zu dem vorausfahrenden Fahrzeug und/oder die Zeit bis zur Kollision mit dem vorausfahrenden Fahrzeug und/oder die Änderung der Zeit bis zur Kollision mit dem vorausfahrenden Fahrzeug und/oder eine eingestellte Wunschgeschwindigkeit und/oder die Beschleunigung des vorausfahrenden Fahrzeugs und/oder Kombinationen aus diesen Parametern, insbesondere Parameter, die einen Eintauchvorgang beschreiben, und/oder die Differenz von Geschwindigkeiten, umfassen. Diese Aufzählung ist natürlich nicht als abschließend anzusehen. Es sind weitere Parameter denkbar, die zur Bestimmung einer Spurwechselmotivation, also einer Wahrscheinlichkeit für einen beabsichtigten Spurwechsel, genutzt werden können.

Es ist auch eine Ausgestaltung denkbar, in der als Parameter ein Rechenwert eingeht, der ein Maß für die Zufriedenheit des Fahrers auf der eigenen Spur darstellt. Bei der Bestimmung eines solchen Zufriedenheitswertes kann z.B. die Zahl der auf einer anderen Spur passierenden Fahrzeuge gezählt werden und in die Berechnung eingehen. Eine solche Zählung ist beispielsweise mit den Sensoren des Spurwechselsystems oder einem mittelreichweitigem Radar problemlos möglich. Es ist beispielsweise häufig der Fall, dass im Stau stehende Fahrer eine Spurwechselabsicht entwickeln, wenn auf einer anderen Fahrspur der Verkehr schneller fliest, also dort eine Vielzahl von Fahrzeugen passiert. Auch eine dermaßen begründete Spurwechselabsicht des Fahrers könnte mit Hilfe eines solchen Rechenwertes im Verfahren vorteilhafterweise berücksichtigt werden.

Vorteilhafterweise können bei der Bestimmung des ersten Rechenwertes auch Parameter betreffend auf die vom eigenen Fahrzeug befahrene Spur auffahrende Verkehrsteilnehmer, insbesondere im Bereich von Ein- oder Auffahrten, berücksichtigt werden. Fahren nämlich, beispielsweise im Bereich einer Auffahrt, viele Fahrzeuge auf eine mehrspurige Strecke, z.B. eine Autobahn auf, so entsteht bei einem Fahrer häufig das Bedürfnis, die Spur zu wechseln, um den Einfädelungsvorgang dieser anderen Verkehrsteilnehmer nicht zu behindern. Zudem stellt eine solche Situation häufig wegen des Naheinscherens auffahrender Kraftfahrzeuge eine Problemsituation für das Fahrerassistenzsystem dar. Selbst wenn ein Spurwechsel in einem solchen fall als nicht möglich detektiert wird, kann die Information über das bevorstehende Einfädeln von dem Längsführungssystem vorteilhaft zu einer Anpassung der Fahrdynamik durch Veränderung der Betriebsparameter genutzt werden.

Zudem können bei der Bestimmung des ersten Rechenwertes Parameter betreffend ein baldiges Fahrspurende, insbesondere durch eine Verkehrszeichenerkennung oder ein Navigationssystem, berücksichtigt werden. Dies gilt selbstverständlich sowohl für ein Ende der momentan vom eigenen Kraftfahrzeug befahrenen Spur, was einer recht hohe Wahrscheinlichkeit für eine Spurwechselabsicht entspricht, als auch das baldige Ende einer Spur, auf die ein Spurwechsel aufgrund der momentanen Verkehrssituation sinnvoll erscheinen könnte. Im ersten Fall wird dem Fahrer also ein zusätzlicher Hinweis gegeben, im zweiten Fall wird ein gegebenenfalls nicht weiterführender Hinweis vermieden.

Mit besonderem Vorteil kann vor der Bestimmung des ersten Rechenwertes wenigstens ein Kriterium zum Ausschluss einer Spurwechselabsicht berücksichtigt werden. In bestimmten Fahrsituationen kann eine Spurwechselabsicht des Fahrers ausgeschlossen werden. Das einfachste Kriterium zum Ausschluss einer Spurwechselabsicht ist sicherlich das - insbesondere durch ein System zur Warnung bei Verlassen der Fahrspur feststellbares - Fehlen einer Spur in die entsprechende Richtung, in die der Spurwechsel sinnvoll beziehungsweise erlaubt wäre. Ein weiteres Kriterium kann beispielsweise aus den Daten eines Navigationssystems bestimmt werden. Ist nämlich dem Navigationssystem aufgrund einer eingegebenen geplanten Fahrtstrecke oder prädikativer Streckendaten bekannt, dass der Fahrer in kurzer Zeit nach rechts abbiegen möchte, so kann eine Spurwechselabsicht nach links ab einem bestimmten Abstand von beispielsweise dieser Ausfahrt ausgeschlossen werden. Eine Berücksichtigung der Parameter und eine weitere Berechnung ist in einem solchen Fall nicht notwendig. Ein weiteres Kriterium dieser Art kann beispielsweise auch der baldige Wegfall einer Fahrspur sein. Ein mit Sicherheit ausgeschlossener Spurwechsel kann wiederum vorteilhaft für den Betrieb des Längsführungssystems benutzt werden. Ist nämlich ein Spurwechsel sicher nicht möglich oder sicher nicht erwünscht und es erfolgt eine Annäherung an einen vorausfahrenden anderen Verkehrsteilnehmer, so kann das Längsführungssystem durch geeignete Anpassung der Betriebsparameter beispielsweise eine frühere Geschwindigkeitsanpassung einleiten, so dass die gesamte Annäherung früher und damit sanfter durchgeführt werden kann.

Der zweite Rechenwert kann durch Überprüfung mehrerer Spurwechseltrajektorien ermittelt werden. Dies können Spurwechseltrajektorien sein, die auf verschiedene benachbarte Fahrspuren führen, jedoch auch verschiedene Möglichkeiten, auf eine bestimmte andere Fahrspur zu wechseln. Auf diese Weise werden alle Optionen, die ein Fahrer für einen Spurwechsel hat, berücksichtigt und auf ihre Sicherheit beziehungsweise Durchführbarkeit überprüft.

Idealerweise können bei der Ermittlung des zweiten Rechenwerts Parameter bezüglich der Position und Bewegung anderer Verkehrsteilnehmer berücksichtigt werden. Solcherlei Parameter sind zur Bestimmung der Sicherheit eines Spurwechsels sehr wichtig. Sie können die Zeit bis zur Kollision eines anderen Verkehrsteilnehmers, mit dem eigenen Kraftfahrzeug und/oder die Zeitlücke eines anderen Verkehrsteilnehmers bezüglich des eigenen Kraftfahrzeugs und/oder wenigstens eine zeitliche Änderung dieser Größen für andere Verkehrsteilnehmer innerhalb einer bestimmten Umgebung des eigenen Kraftfahrzeugs für alle möglichen Spurwechseltrajektorien umfassen. Solcherlei Parameter können beispielsweise aus den Erfassungsmitteln eines Spurwechselassistenzsystems gewonnen werden. Bei Berücksichtigung aller anderen Verkehrsteilnehmer in der Umgebung des Kraftfahrzeugs kann eine verlässliche Parametrisierung des zweiten Rechenwerts erreicht werden.

In einer weiteren Ausführungsform der Erfindung kann dabei auch der Komfort eines solchen Spurwechsels berücksichtigt werden. Oft ist es möglich, einen Spurwechsel durchzuführen, dieser ist jedoch mit starken Querbeschleunigungen und abrupten Lenkmanövern unkomfortabel belastet. Daher können bei den zweiten Parametern zur Bestimmung des zweiten Rechenwerts eine obere Grenze für die Dauer des Spurwechsels und/oder die auftretenden Querbeschleunigungen berücksichtigt werden. Dem Fahrer wird dann nur ein Spurwechsel vorgeschlagen, wenn er bestimmten Anforderungen an den Komfort genügt, also beispielsweise besonders sanft durchführbar ist.

Mit besonderem Vorteil kann der zweite Rechenwert während der Überschreitung des ersten Rechenwertes fortlaufend, vorzugsweise unter Rückgriff auf Informationen vergangener Bestimmungen, bestimmt werden. Es wird demgemäß nicht nur zum Zeitpunkt der Überschreitung des ersten Rechenwertes einmalig bestimmt, ob ein Spurwechsel nun möglich und sicher wäre, sondern die Bestimmung findet innerhalb eines gesamten Zeitfensters statt, in dem eine Spurwechselabsicht festgestellt wird. Ergibt sich also im weiteren Verlauf eine Möglichkeit zum Spurwechsel, so wird diese angezeigt. Vorzugsweise werden dabei auch Informationen bezüglich vergangener Bestimmungen des zweiten Rechenwertes zugrunde gelegt.

Dem Fahrer kann die Möglichkeit eines Spurwechsels haptisch, optisch ünd/oder akustisch angezeigt werden. Denkbar wären hier beispielsweise eine Vibration des Lenkrades, das Aufleuchten einer Anzeige oder ein bestimmtes Piepsignal, womit dem Fahrer angezeigt wird, dass nun der geeignete Zeitpunkt für einen Spurwechsel wäre.

Mit besonderem Vorteil kann die Möglichkeit eines Spurwechsels nur so lange angezeigt werden, wie der zweite Rechenwert oberhalb des Schwellwertes für den zweiten Rechenwert verbleibt. Die Anzeige erlischt also, sobald ein Spurwechsel nicht mehr möglich ist oder nicht mehr sicher genug ist.

Die Bestimmung der Rechenwerte im Rahmen des erfindungsgemäßen Fahrens findet vorteilhafterweise unter Verwendung von Fuzzy-Logik statt. Diese ist für die Bestimmung von Wahrscheinlichkeiten oder die Kombination verschiedener Parameter besonders geeignet.

Die Anzeige der Spurwechselmöglichkeit kann auch einen expliziten Hinweis darauf enthalten, dass das Längsführungssystem einem Spurwechsel nicht störend gegenüber stünde.

Das Erfassen eines bereits eingeleiteten Spurwechsels im dritten größeren Schritt findet auf eine grundsätzlich bekannte Art und Weise statt. Hier sind eine Vielzahl von dritten Parametern denkbar, aus denen ein eingeleiteter Spurwechsel bestimmbar ist. Neben den schon erwähnten fahrdynamischen Größen (Lenkwinkel, Querbeschleunigung, Gierwinkel...) sowie der Betätigung des Fährtrichtungsanzeigers und/oder des Gaspedals kann auch das Verhalten bezüglich weiterer Verkehrsteilnehmer berücksichtigt werden, so etwa der Querversatz eines anderen Verkehrsteilnehmers beziehungsweise dessen zeitliche Änderung. Insbesondere können auch hier die Daten beispielsweise eines Navigationssystems berücksichtigt werden. So kann beispielsweise eine Kurvenfahrt von einem Spurwechsel unterschieden werden.

Daneben betrifft die Erfindung auch ein Kraftfahrzeug mit einem Längsführungssystem, das zur Durchführung des erfindungsgemäßen Verfahrens ausgebildet ist.

Weitere Vorteile und Einzelheiten der Erfindung ergeben sich aus dem im Folgenden beschriebenen Ausführungsbeispiel wie anhand der Zeichnungen. Dabei zeigen:
- Fig. 1: eine Prinzipskizze eines erfindungsgemäßen Kraftfahrzeugs,
- Fig. 2: einen Ablaufplan des erfindungsgemäßen Verfahrens und
- Fig. 3 bis Fig. 7: das erfindungsgemäße Kraftfahrzeug in verschiedenen Verkehrssituationen.

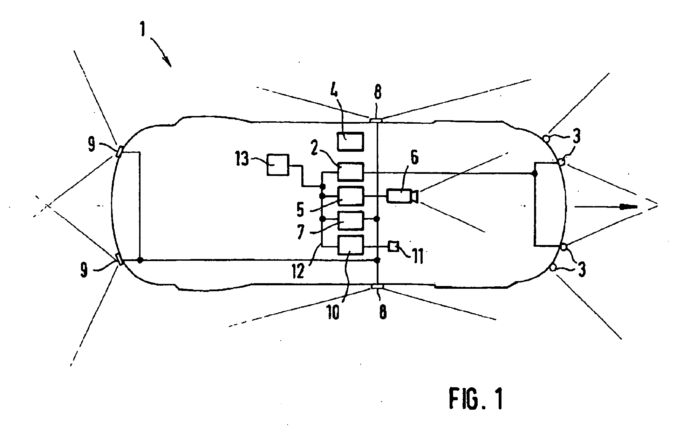

Fig. 1 zeigt ein erfindungsgemäßes Kraftfahrzeug 1. Es ist neben anderen Fahrerassistenzsystemen mit einem Längsführungssystem 2 ausgestattet, hier einem so genannten "Adaptive Cruise Control"-System. Dem Längsführungssystem 2 sind langreichweitige Radarsensoren 3 zugeordnet, die im vorliegenden Ausführungsbeispiel mit einer Frequenz von 77 GHz arbeiten und Verkehrsteilnehmer im Vorfeld des Kraftfahrzeugs erkennen sollen. Weiterhin ist dem Längsführungssystem 2 ein Anzeigemittel 4 zugeordnet. Das Kraftfahrzeug umfasst zudem ein System zur Warnung bei Verlassen der Fahrspur 5, hier ein so genanntes "Lane Departure Warning"-System. Das System 5 wertet über eine Bildverarbeitung die Daten einer nach vorne gerichteten Kamera 6 aus, um die Verläufe der Fahrspuren erkennen zu können. Einem Spurwechselassistenzsystem 7 sind seitliche Sensoren 8 und rückwärtige Sensoren 9 zugeordnet, mit Hilfe derer festgestellt werden kann, ob ein anderer Verkehrsteilnehmer sich in einer einen Spurwechsel gefährdenden Situation befindet. Schließlich ist noch ein Navigationssystem 10 mit einem GPS-Sensor 11 im Fahrzeug 1 vorhanden. Die verschiedenen Fahrerassistenzsysteme 2, 5, 7 und 10 können mit Hilfe eines Bussystems 12, im Ausführungsbeispiel ein CAN-System, Daten untereinander austauschen. Bei 13 sind weitere Erfassungsmittel angedeutet, die ihre Daten und gemessenen Parameter den Fahrerassistenzsystemen zur Verfügung stellen können. Mit Hilfe der Daten und Parameter der Erfassungsmittel und der weiteren Fahrerassistenzsysteme 5, 7 und 10 beziehungsweise der ihnen zugeordneten Sensoren 6, 8, 9 und 11, sowie mit Hilfe weiterer, aus diesen Daten und Parametern bestimmte Parameter, ist das Längsführungssystem 2 zur Durchführung des erfindungsgemäßen Verfahrens ausgebildet. Dabei gehen selbstverständlich auch Messwerte der Radarsensoren 3 ein.

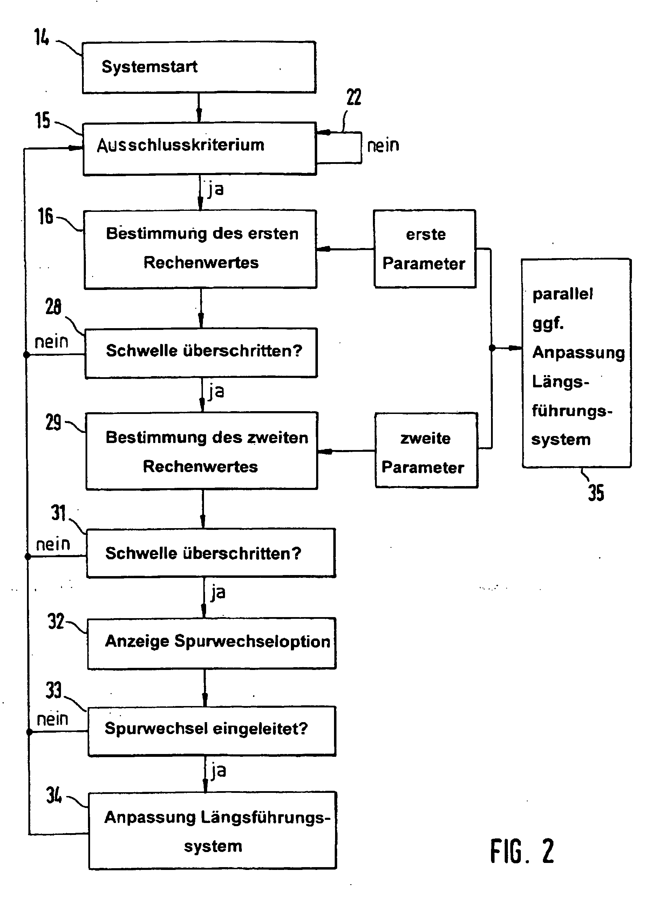

Ein Ablaufplan eines erfindungsgemäßen Verfahrens ist in Fig. 2 dargestellt. Nach dem Systemstart im Schritt 14 werden kontinuierlich die Schritte 15 und gegebenenfalls 16 ausgeführt. In Schritt 15 wird zunächst überprüft, ob ein Ausschlusskriterium erfüllt ist, mit Hilfe dessen eine Spurwechselabsicht ausgeschlossen werden kann.

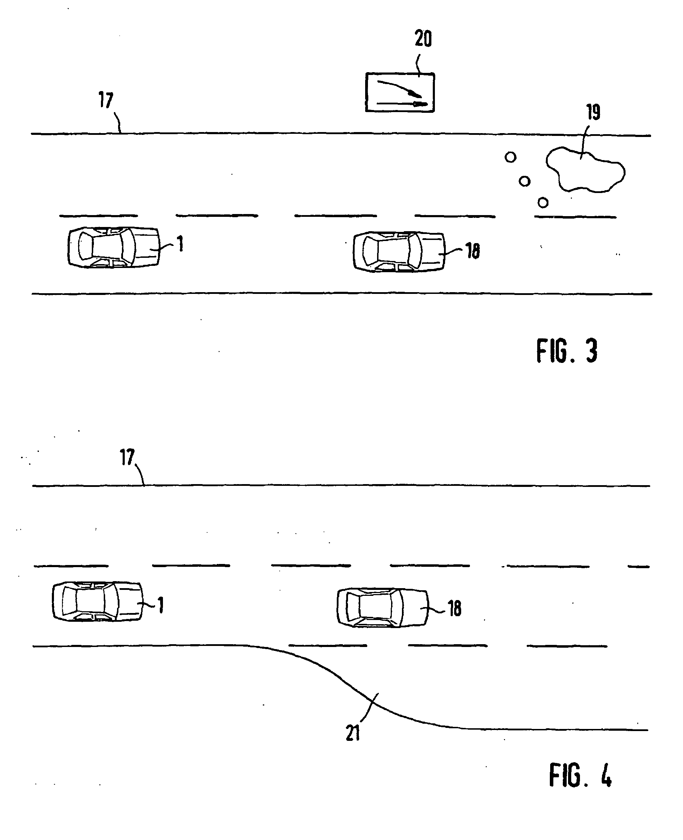

Solche Ausschlusskriterien sind beispielsweise in den Figuren 3 und 4 näher dargestellt. Dort befindet sich das erfindungsgemäße Kraftfahrzeug 1 auf einer zweispurigen Fahrbahn 17. Es folgt einem voranfahrenden Verkehrsteilnehmer, nämlich einem anderen Fahrzeug 18. In Fig. 3 ist weiterhin auf der linken Spur eine Baustelle 19 zu erkennen, wegen der die linke Spur gesperrt ist. Darauf weist ein Verkehrsschild 20 hin. Das Verkehrsschild 20 kann nun, beispielsweise mit Hilfe einer Bildverarbeitung der Daten der Kamera 6, von dem Längsführungssystem 2 detektiert und ausgewertet werden. Es wird folglich festgestellt, dass die linke Spur beispielsweise in 100 m wegfallen wird. Das Ende einer Fahrspur muss dabei nicht durch eine Verkehrszeichenerkennung erkannt werden. Eine solche Information kann beispielsweise auch vom Navigationssystem 10 zur Verfügung gestellt werden. Innerhalb der letzten 200 m ist ein Spurwechsel und somit ein versuchter Überholvorgang bei der momentanen Geschwindigkeit des Kraftfahrzeugs 1 nicht mehr durchführbar. Da die Spur in 100 m endet, ist in dem Fall der Fig. 3 somit ein Ausschlusskriterium gegeben, der Fahrer wird in dieser Situation also die Spur nicht wechseln wollen. Der Grenzwert für einen solchen Abstand von einer endenden Fahrspur muss dabei nicht absolut definiert sein, sondern kann von der momentanen Eigengeschwindigkeit und gegebenenfalls auch von der Geschwindigkeit anderer zu überholender Verkehrsteilnehmer abhängig gemacht werden.

Ein weiteres Ausschlusskriterium wird durch Fig. 4 illustriert. Das Kraftfahrzeug 1 folgt dabei auch einem weiteren Verkehrsteilnehmer, dem Fahrzeug 18, auf einer zweispurigen Fahrbahn 17. Dem Navigationssystem ist nun die Information zu entnehmen, dass der Fahrer gemäß der von ihm geplanten Fahrtstrecke hier von der zweispurigen Fahrbahn 17 mit Hilfe der Ausfahrt 21 abfahren möchte. Obwohl die linke Spur hier vollkommen frei ist und das Fahrzeug 18 gegebenenfalls sehr langsam fährt, kann eine Spurwechselabsicht ausgeschlossen werden, da der Fahrer in wenigen Metern abfahren muss. Auch hierfür sind in dem Längsführungssystem gegebenenfalls Geschwindigkeits- oder von anderen Parametern abhängige Schwellwerte enthalten, die das Verfahren zur Bestimmung dieses Ausschlusskriteriums nutzt.

Ist ein derartiges Ausschlusskriterium gefunden, so ist eine Bestimmung des ersten Rechenwertes, der ein Maß für die Wahrscheinlichkeit eines vom Fahrer beabsichtigten Spurwechsels angibt, nicht mehr erforderlich, da diese Wahrscheinlichkeit gleich Null ist. Es wird also, wie in Fig. 2 durch den Pfeil 22 angedeutet, lediglich weiter überprüft, ob das Ausschlusskriterium noch vorliegt.

Liegt kein Ausschlusskriterium vor, so wird in Schritt 16 der erste Rechenwert von dem Längsführungssystem 2 bestimmt. Dies geschieht auf Grundlage von ersten Parametern, die vielfältig ausgestaltet sein können. Die Parameter können zum Teil direkt von anderen Fahrerassistenzsystemen beziehungsweise Erfassungsmitteln übernommen werden, zum Teil werden sie aus Daten anderer Fahrerassistenzsysteme beziehungsweise Erfassungsmitteln bestimmt. Im vorliegenden Ausführungsbeispiel gehen folgende Parameter in die Bestimmung des ersten Rechenwerts ein.

Zunächst wird die relative Geschwindigkeitsdifferenz zu einem vorausfahrenden Verkehrsteilnehmer als Parameter bestimmt. Dazu wird die Differenz der Eigengeschwindigkeit und der des voranfahrenden Fahrzeuges gebildet und durch Division durch die Eigengeschwindigkeit auf diese normiert. Die Eigengeschwindigkeit wird aus Gründen der Anzeige auf einem Tachometer ohnehin von jedem üblichen Kraftfahrzeug ständig erfasst und von dem entsprechenden Erfassungsmittel zur Verfügung gestellt. Die Geschwindigkeit des voranfahrenden Verkehrsteilnehmers beziehungsweise die Relativgeschwindigkeit kann beispielsweise aus den Daten der Radarsensoren bestimmt werden.

Aus den Daten der Radarsensoren 3 kann auch der Abstand des eigenen Kraftfahrzeugs zu dem voranfahrenden Verkehrsteilnehmer bestimmt werden. Aus diesen Werten kann die Zeitlücke bezüglich des voranfahrenden Verkehrsteilnehmers sowie die Zeit bis zur Kollision mit dem voranfahrenden Verkehrsteilnehmer bestimmt werden. Da die Zeitlücke und die Zeit bis zur Kollision ständig berechnet werden, kann auch ihre zeitliche Entwicklung als Parameter berücksichtigt werden. Ein weiterer wichtiger Parameter ist die Abweichung der momentanen Eigengeschwindigkeit von der zuvor eingestellten gewünschten Geschwindigkeit. Zudem wird der Eintauchvorgang, der über die Ist-Zeitlücke im Verhältnis zur Soll-Zeitlücke beschrieben wird, zur Bestimmung mit verwendet. Als weiterer wichtiger Parameter geht die Beschleunigung des voranfahrenden Verkehrsteilnehmers, wiederum beispielsweise bestimmt durch die Radarsensoren 3, ein.

Als zusätzlicher Parameter ist ein Wert vorgesehen, der die Zufriedenheit des Fahrers auf der eigenen Spur im Vergleich zu der Zufriedenheit des Fahrers auf der Fremdspur angibt. Ein solcher Wert kann beispielsweise anhand der Zahl der Verkehrsteilnehmer, die das eigene Kraftfahrzeug überholen, parametrisiert werden. Diese Zahl lässt sich mit Hilfe der Sensoren 8 und 9 feststellen.

Unter Auswertung des von der Kamera 6 aufgenommenen Bildes kann in die ersten Parameter auch das Vorhandensein beispielsweise einer Auffahrt aufgenommen werden. Dort wollen besonders viele Fahrzeuge auf die von dem Kraftfahrzeug benutzte Fahrbahn wechseln, gegebenenfalls sogar auf dessen Fahrspur. Ist dies der Fall, so kann vermutet werden, dass der Fahrer eine Spurwechselabsicht hat, um zu vermeiden, beispielsweise geschnitten zu werden. Ein solcher Einschervorgang, der dicht vor dem eigenen Kraftfahrzeug stattfindet, stellt auch eine kritische Situation für das Längsführungssystem 2 dar.

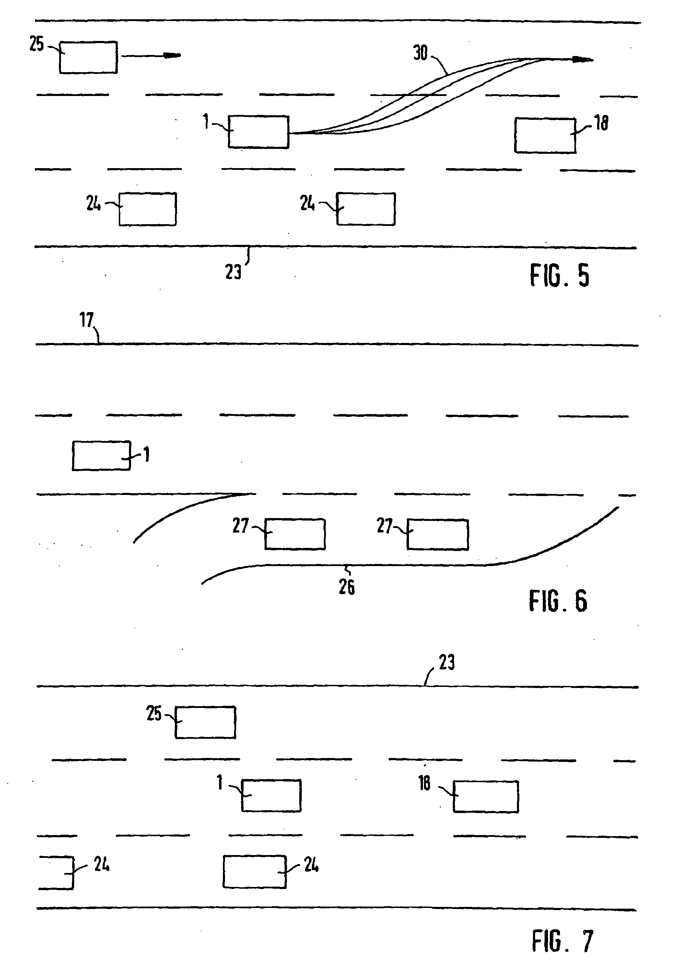

Beispielhafte Situationen sind in den Figuren 5 und 6 dargestellt. In Fig. 5 fährt das erfindungsgemäße Kraftfahrzeug 1 auf der mittleren Fahrspur einer dreispurigen Fahrbahn 23, wiederum hinter einem voranfahrenden Fahrzeug 18. Auf der rechten Spur befinden sich zwei weitere Verkehrsteilnehmer 24. Ein weiterer Verkehrsteilnehmer 25 nähert sich auf der linken Spur von hinten. Wenn nun das Fahrzeug 18 gerade auf eine niedrige Geschwindigkeit abbremst, so schlägt sich dies in den gerade beschriebenen ersten Parametern nieder. Beispielsweise nimmt die Zeitlücke und die Zeit bis zur Kollision ab. Da das Längsführungssystem 2 automatisch die Geschwindigkeit angleicht, nimmt auch die Abweichung der Eigengeschwindigkeit von der Wunschgeschwindigkeit zu. Ein Ausschlusskriterium ist nicht gegeben, so dass die Wahrscheinlichkeit für einen Spurwechsel im beschriebenen Beispiel recht groß ist, so dass ein recht großer erster Rechenwert resultiert.

Ein weiteres Beispiel zeigt Fig. 6. Das erfindungsgemäße Kraftfahrzeug fährt auf einer zweispurigen Fahrbahn 17. Voraus befindet sich eine Beschleunigungsspur 26, auf der sich zwei weitere Verkehrsteilnehmer 27 befinden. Obwohl sich im näheren Umfeld auf den beiden Spuren der Fahrbahn 17 keine weiteren Verkehrsteilnehmer befinden, wird der Fahrer des Kraftfahrzeugs 1 hier beabsichtigen, auf die linke Spur zu wechseln, damit die Verkehrsteilnehmer 27 einfädeln können. Es resultiert ein hoher erster Rechenwert.

Wie wiederum aus Fig. 2 ersichtlich ist, wird im folgenden Schritt 28 überprüft, ob der erste Rechenwert eine Schwelle für den ersten Rechenwert überschreitet. Das bedeutet, das System überprüft, ob mit einer großen Wahrscheinlichkeit eine Absicht zum Spurwechsel beim Fahrer vorliegt. Ist dies nicht der Fall, so wird das Verfahren wiederum mit der Durchführung der Schritte 15 und gegebenenfalls 16 fortgesetzt. Ist die Schwelle jedoch überschritten; so wird weiterhin ein zweiter Rechenwert bestimmt, der ein Maß für die Sicherheit eines möglichen Spurwechselvorgangs ist. Dies geschieht in Schritt 29 wie gezeichnet unter Berücksichtigung zweiter Parameter. Die zweiten Parameter sind nicht notwendig von den ersten Parametern vollständig verschieden, es können durchaus Parameter verwendet werden, die auch schon als erste Parameter verwendet wurden.

Nun werden zunächst mögliche Spurwechseltrajektorien bestimmt. Dies ist beispielsweise mit Hilfe der Daten des Systems zur Warnung bei Verlassen der Fahrspur 5 oder dessen zugeordneter Kamera 6 möglich. Für den Verlauf des Spurwechsels wird eine grob S-förmige Funktion angesetzt, die jedoch verschieden ausgestaltet sein kann. Hier ist zu beachten, dass die Zahl der möglichen Spurwechseltrajektorien für Überholvorgänge gegebenenfalls durch das Straßenverkehrsgesetz eines Landes beschränkt sein kann. So ist es in Deutschland nicht gestattet, rechts zu überholen.

Sind mögliche Spurwechseltrajektorien bestimmt, so werden weiterhin andere Verkehrsteilnehmer sowie momentane Betriebsparameter derselben mit Hilfe der Sensoren 3, 6, 8 und 9 beziehungsweise der Fahrerassistenzsysteme 5 und 7 oder anderer Erfassungsmittel 13 bestimmt. Zu jedem dieser anderen Verkehrsteilnehmer werden dann als zweite Parameter die Zeit bis zur Kollision eines anderen Verkehrsteilnehmers mit dem eigenen Kraftfahrzeug, die Zeitlücke eines anderen Verkehrsteilnehmers bezüglich des eigenen Kraftfahrzeugs und die zeitlichen Änderungen dieser Größen für alle möglichen Spunrvechseltrajektorien zu allen Zeitpunkten dieses Spurwechsels bestimmt und ausgewertet.

Beispiele zur Bestimmung des zweiten Rechenwertes bieten wiederum die Figuren 5, 6 sowie die Fig. 7. In Fig. 5 scheidet ein Spurwechsel auf die rechte Spur schon wegen der anderen Verkehrsteilnehmer 24 aus. Da sich der andere Verkehrsteilnehmer 25 auf der linken Spur mit keiner sehr großen Geschwindigkeit gegenüber dem Kraftfahrzeug 1 bewegt, ist ein Wechsel auf die linke Spur jedoch durchaus möglich, da bei Eintreten des Kraftfahrzeugs 1. in die linke Spur zu jedem Zeitpunkt die Werte für die Zeit bis zur Kollision beziehungsweise die Zeitlücke groß genug sind und zudem ihre zeitliche Änderung klein genug. Eine mögliche Trajektorienschar ist bei 30 in Fig. 5 angedeutet.

Fig. 7 zeigt die Situation der Fig. 5 zu einem etwas späteren Zeitpunkt. Die Verkehrsteilnehmer 24 auf der rechten Spur sind fast überholt, aber der Verkehrsteilnehmer 25 hat das Kraftfahrzeug 1 nun fast erreicht. In einer solchen Situation ist auch ein Spurwechsel auf die linke Spur nicht mehr gefahrlos möglich, da die Gefahr einer Kollision mit dem anderen Verkehrsteilnehmer 25 beziehungsweise einer verkehrsgefährdenden Situation besteht. Der zweite Rechenwert ist hier also sehr niedrig bestimmt.

Fig. 6 stellt in gewisser Weise einen Idealfall dar, in dem beide Geradeausspuren zur Zeit frei sind. Ein Spurwechsel auf die linke Spur ist hierbei kein Problem, so dass ein relativ großer zweiter Rechenwert bestimmt wird.

Ist der zweite Rechenwert bestimmt, so wird überprüft, ob er einen Schwellwert für den zweiten Rechenwert überschritten hat. Ist dies nicht der Fall, so bedeutet das, dass ein Spurwechsel nicht möglich oder zu unsicher ist. Das Verfahren bestimmt nun wiederum ab Schritt 15 den ersten Rechenwert und gegebenenfalls den zweiten Rechenwert. Ist der Schwellwert jedoch überschritten, ein Spurwechsel also möglich und sicher, so wird dem Fahrer zunächst mit Hilfe des Anzeigemittels 4 die Möglichkeit zum Spurwechsel angezeigt, wodurch er gleichzeitig die Information erhält, dass es nicht zu ungewünschten Effekten aufgrund der Verwendung des Längsführungssystems 2 kommen wird. Das Anzeigemittel 4 kann beispielsweise eine Vibrationsvorrichtung für das Lenkrad, ein optisch zu sehendes Lämpchen oder ein akustischer Tongeber sein. Nachdem der Fahrer von der Möglichkeit eines Spurwechsels in Schritt 32 in Kenntnis gesetzt wurde, wird in Schritt 33 überprüft, ob tatsächlich ein Spurwechsel eingeleitet ist. Ist das nicht der Fall, so wird das Verfahren bei Schritt 15 erneut begonnen. An dieser Stelle ist anzumerken, dass entweder eine zeitlich begrenzte Anzeige durch das Detektieren einer Spurwechselmöglichkeit ausgelöst wird. Diese kann auch von einem in Schritt 29 bestimmten Zeitfenster, in der ein Spurwechsel sicher anzusehen ist, abhängig sein. Eine andere Option ist, bei Nichtüberschreitung der jeweiligen Schwellwerte in den Schritten 28 beziehungsweise 31 zu überprüfen, ob eine Anzeige vorliegt, und diese gegebenenfalls zu deaktivieren. Damit wird sichergestellt, dass die Möglichkeit eines Spurwechsels nur so lange angezeigt wird, wie sie vom Fahrer als beabsichtigt bestimmt wurde und auch sicher und möglich ist.

Zusätzlich zu dem zweiten Rechenwert wird auch ein Zeitfenster bestimmt, das angibt, wie lange der Spurwechsel sicher ist. Die Daten werden gespeichert, um bei weiteren Berechnungen wieder verwendet zu werden. Außerdem sind sie bei einem tatsächlich erfassten eingeleiteten Spurwechsel eine wichtige Grundlage zur Anpassung der Betriebsparameter des Längsführungssystems 2.

Wurde ein eingeleiteter Spurwechsel in Schritt 33 detektiert, so können nun die Parameter des Längsführungssystems 2 entsprechend angepasst werden, um eine optimale Fahrdynamik zu gewährleisten, wie dies bei 34 angedeutet ist.

Wie bei 35 angedeutet ist, können die in den ersten und zweiten Parameter enthaltenen Informationen auch zu einer ständigen Anpassung des Längsführungssystems 2 verwendet werden. Dies ist beispielsweise dann sinnvoll, wenn detektiert wurde, dass einfädelnde Fahrzeuge zu befürchten sind. Dann kann das Längsführungssystem 2 darauf vorbereitet werden, dass gegebenenfalls andere Verkehrsteilnehmer zu dicht einscheren.

Eine weitere, in den Figuren noch nicht enthaltene Erweiterung des erfindungsgemäßen Verfahrens sieht vor, dass in die zweiten Parameter zur Bestimmung des zweiten Rechenwertes auch Parameter eingehen, die ausdrücken, wie angenehm ein Spurwechsel zu vollziehen ist. Solche Parameter sind beispielsweise eine minimale oder maximale Dauer eines Spurwechselvorgangs und/oder die dabei auftretenden Querbeschleunigungen. Damit kann das Längsführungssystem 2 beziehungsweise das erfindungsgemäße Verfahren auch dem Komfort des Fahrers zuträglich sein.

## Patentansprüche

1. Verfahren zum Betrieb eines Längsführungssystems (2) in einem Kraftfahrzeug (1), bei dem
fortlaufend ein erster Rechenwert, der ein Maß für die Wahrscheintichkeit eines vom Fahrer beabsichtigten Spurwechsels ist, aus ersten, von Erfassungsmitteln (3,6,8,9,10,11) bestimmten Parametern, die Informationen über den Betriebszustand des Fahrzeugs und/oder seine Umgebung enthalten, bestimmt wird,
wobei bei einem einen vorbestimmten Schwellwert überschreitenden ersten Rechenwert ein zweiter Rechenwert, der ein Maß für die Sicherheit eines möglichen Spurwechsetvorgangs ist, aus zweiten, von Erfassungsmitteln (3,6,8,9,10,11) bestimmten Parametern, die Informationen über den Betriebszustand des Fahrzeugs und/oder seine Umgebung enthalten, bestimmt wird,
wonach bei Überschreitung eines Schwellwertes für den zweiten Rechenwert einem Fahrer die Möglichkeit eines Spurwechsels angezeigt wird, und
wonach bei Erfassen eines eingeleiteten Spurwechsels die Betriebsparameter des Längsführungssystems (2) unter Berücksichtigung der in den vorangehenden Schritten ermittelten Informationen angepasst werden.

2. Verfahren nach Anspruch 1, **dadurch gekennzeichnet, dass** zumindest ein Teil der Erfassungsmittel Teil anderer Fahrerassistenzsysteme, insbesondere eines Navigationssystems und/oder eines Spurwechselassistenzsystems und/oder eines Systems zur Warnung bei Verlassen der Fahrspur, sind.

3. Verfahren nach Anspruch 1 oder 2, **dadurch gekennzeichnet, dass** die ersten Parameter die Geschwindigkeit des Fahrzeuges und/oder die Geschwindigkeit eines vorausfahrenden Fahrzeuges und/oder der Abstand zu dem vorausfahrenden Fahrzeug und/oder die Zeitlücke zu dem vorausfahrenden Fahrzeug und/oder die zeitliche Änderung der Zeitlücke zu dem vorausfahrenden Fahrzeug und/oder die Zeit bis zur Kollision mit dem vorausfahrenden Fahrzeug und/oder die Änderung der Zeit bis zur Kollision mit dem vorausfahrenden Fahrzeug und/oder eine eingestellte Wunschgeschwindigkeit und/oder die Beschleunigung des vorausfahrenden Fahrzeugs und/oder Kombinationen aus diesen Parametern, insbesondere Parameter, die einen Eintauchvorgang beschreiben, und/oder die Differenz von Geschwindigkeiten, umfassen.

4. Verfahren nach einem der vorangehenden Ansprüche, **dadurch gekennzeichnet, dass** bei der Bestimmung des ersten Rechenwertes Parameter betreffend auf die vom eigenen Fahrzeug befahrene Spur auffahrende Verkehrsteilnehmer, insbesondere im Bereich von Ein- oder Auffahrten, berücksichtigt werden.

5. Verfahren nach einem der vorangehenden Ansprüche, **dadurch gekennzeichnet, dass** bei der Bestimmung des ersten Rechenwertes Parameter betreffend ein baldiges Fahrspurende, insbesondere durch eine Verkehrszeichenerkennung oder ein Navigationssystem, berücksichtigt werden.

6. Verfahren nach einem der vorangehenden Ansprüche, **dadurch gekennzeichnet, dass** vor der Bestimmung des ersten Rechenwertes wenigstens ein Kriterium zum Ausschluss einer Spurwechselabsicht berücksichtigt wird.

7. Verfahren nach Anspruch 6, **dadurch gekennzeichnet, dass** das Kriterium aus den Daten eines Navigationssystems bestimmt wird.

8. Verfahren nach einem der vorangehenden Ansprüche, **dadurch gekennzeichnet, dass** der zweite Rechenwert durch Überprüfung mehrerer Spunwechseltrajektorien ermittelt wird.

9. Verfahren nach einem der vorangehenden Ansprüche, **dadurch gekennzeichnet, dass** bei der Ermittlung des zweiten Rechenwerts Parameter bezüglich der Position und Bewegung anderer Verkehrsteilnehmer berücksichtigt werden.

10. Verfahren nach Anspruch 9, **dadurch gekennzeichnet, dass** die Zeit bis zur Kollision eines anderen Verkehrsteilnehmers mit dem eigenen Kraftfahrzeugs und/oder die Zeitlücke eines anderen Verkehrsteilnehmers bezüglich des eigenen Kraftfahrzeugs und/oder wenigstens eine zeitliche Änderung dieser Größen für alle Verkehrsteilnehmer innerhalb einer bestimmten Umgebung des eigenen Kraftfahrzeugs für alle möglichen Spurwechseltrajektorien als zweite Parameter bestimmt werden.

11. Verfahren nach einem der vorangehenden Ansprüche, **dadurch gekennzeichnet, dass** bei der Bestimmung des zweiten Rechenwertes eine obere Grenze für die Dauer des Spurwechsels und/oder die auftretenden Querbeschleunigungen berücksichtigt wird.

12. Verfahren nach einem der vorangehenden Ansprüche, **dadurch gekennzeichnet, dass** der zweite Rechenwert während der Überschreitung des ersten Rechenwertes fortlaufend, vorzugsweise unter Rückgriff auf Informationen vergangener Bestimmungen, bestimmt wird.

13. Verfahren nach einem der vorangehenden Ansprüche, **dadurch gekennzeichnet, dass** dem Fahrer die Möglichkeit eines Spurwechsels haptisch, optisch und/oder akustisch angezeigt wird.

14. Verfahren nach einem der vorangehenden Ansprüche, **dadurch gekennzeichnet, dass** die Möglichkeit eines Spurwechsels nur so lange angezeigt wird, wie der zweite Rechenwert oberhalb des Schwellwertes für den zweiten Rechenwert verbleibt.

15. Kraftfahrzeug mit einem Längsführungssystem, **dadurch gekennzeichnet, dass** das Längsführungssystem zur Durchführung des Verfahrens nach einem der Ansprüche 1 bis 14 ausgebildet ist.

## Claims

1. Method of operating a longitudinal guiding system (2) in a motor vehicle (1) in which
a first operand, which is a measure of the likelihood that the driver intends to change lanes, is continuously determined from first parameters determined by detecting means (3, 6, 8, 9,
10, 11) which contain information about operating conditions of the vehicle and/or its surroundings,
wherein, when the first operand exceeds a predetermined threshold value, a second operand, which is a measure of the safety of a possible lane change procedure, is determined from second parameters determined by detecting means (3, 6, 8, 9, 10, 11) which contain information about operating conditions of the vehicle and/or its surroundings,
whereupon, when a threshold value for the second operand is exceeded, the possibility of a lane change is indicated to the driver, and,
whereupon, when initiation of a lane change has been detected, the operating parameters of the longitudinal guiding system (2) are adapted taking into account the information ascertained in the preceding steps.

2. Method according to claim 1, **characterised in that** at least part of the detecting means form part of other driver assist systems, especially of a navigation system and/or a lane change assist system and/or a lane departure warning system.

3. Method according to claim 1 or 2, **characterised in that** the first parameters comprise the vehicle speed and/or the speed of a preceding vehicle and / or the distance to the preceding vehicle and/or the time gap to the preceding vehicle and/or the variation with time of the time gap to the preceding vehicle and/or the time until collision with the preceding vehicle and/or the variation of the time until collision with the preceding vehicle and/or a selected desired speed and/or the acceleration of the preceding vehicle and/or combinations of these parameters, especially parameters which describe an insertion procedure, and/or the difference in speeds.

4. Method according to one of the preceding claims, **characterised in that**, in the determination of the first operand, account is taken of parameters relating to traffic participants driving in the lane driven by one's own vehicle, especially in the region of incoming or joining traffic.

5. Method according to one of the preceding claims, **characterised in that**, upon determination of the first operand, parameters are taken into account relating to the impending ending of a traffic lane, especially by traffic sign recognition or by a navigation system.

6. Method according to one of the preceding claims, **characterised in that**, prior to determination of the first operand, at least one criterion that precludes an intention to change lanes, is taken into account.

7. Method according to claim 6, **characterised in that** the criterion is determined from the data of a navigation system.

8. Method according to one of the preceding claims, **characterised in that** the second operand is ascertained by checking a plurality of lane change trajectories.

9. Method according to one of the preceding claims, **characterised in that**, on ascertaining the second operand, parameters relating to the position and movement of other traffic participants are taken into account.

10. Method according to claim 9, **characterised in that** there are determined as second parameters, the time to collision of another traffic participant with one's own motor vehicle, and/or the time gap of another traffic participant in relation to one's own motor vehicle, and/or at least one variation with time of these magnitudes for all traffic participants within a defined surroundings of one's own motor vehicle for all possible lane change trajectories.

11. Method according to one of the preceding claims, **characterised in that**, upon determination of the second operand, there is taken into account an upper limit for the duration of the lane change and/or the transverse accelerations that occur.

12. Method according to one of the preceding claims, **characterised in that** the second operand, while it exceeds the first operand, is determined continuously, preferably with resort to information from previous determinations.

13. Method according to one of the preceding claims, **characterised in that** the possibility of a lane change is indicated to the driver haptically, visually and/or acoustically.

14. Method according to one of the preceding claims, **characterised in that** the possibility of a lane change is indicated only so long as the second operand remains above the threshold value for the second operand.

15. Motor vehicle having a longitudinal guiding system **characterised in that** the longitudinal guiding system is arranged for carrying out the method according to one of claims 1 to 14.

## Revendications

1. Procédé d'exploitation d'un système de guidage longitudinal (2) dans un véhicule automobile (1), dans lequel
une première valeur de calcul est déterminée en continu, laquelle est une mesure pour la vraisemblance d'un changement de voie voulu du conducteur, à partir de premiers paramètres déterminés par des moyens de détection (3, 6, 8, 9, 10, 11) qui contiennent des informations sur l'état de fonctionnement du véhicule et/ou son environnement,
grâce à quoi une première valeur de calcul dépassant une valeur seuil prédéterminée étant déterminée une seconde valeur de calcul qui est une mesure pour la sécurité d'un possible processus de changement de voie, à partir de seconds paramètres déterminés par des moyens de détection (3, 6, 8, 9, 10, 11) qui contiennent des informations sur l'état de fonctionnement du véhicule et/ou son environnement,
après quoi en cas de dépassement d'une valeur seuil pour la seconde valeur de calcul, la possibilité d'un changement de voie est indiquée au conducteur, et
après quoi, lors de la détection d'un changement de voie engagé, les paramètres de fonctionnement du système de guidage longitudinal (2) sont adaptés en tenant compte des informations déterminées lors des étapes précédentes.

2. Procédé selon la revendication 1, **caractérisé en ce qu'**au moins une partie des moyens de détection fait partie d'autres systèmes d'assistance au conducteur, notamment d'un système de navigation et/ou d'un système d'assistance au changement de voie et/ou d'un système d'avertissement en cas de sortie de voie de circulation.

3. Procédé selon la revendication 1 ou 2, **caractérisé en ce que** les premiers paramètres comprennent la vitesse du véhicule et/ou la vitesse d'un véhicule circulant devant et/ou la distance par rapport au véhicule circulant devant et/ou l'intervalle temporel par rapport au véhicule circulant devant et/ou la modification temporelle de l'intervalle temporel par rapport au véhicule circulant devant et/ou le temps restant avant une collision avec le véhicule circulant devant et/ou la modification du temps restant avant une collision avec le véhicule circulant devant et/ou une vitesse souhaitée réglée et/ou l'accélération du véhicule circulant devant et/ou des combinaisons de ces paramètres, notamment des paramètres qui décrivent un processus d'immersion, et/ou la différence des vitesses.

4. Procédé selon l'une quelconque des revendications précédentes, **caractérisé en ce que**, lors de la détermination de la première valeur de calcul, des paramètres concernant les usagers de la route accédant à la voie sur laquelle circule le propre véhicule, notamment dans la zone des entrées ou bretelles d'accès, sont pris en considération.

5. Procédé selon l'une quelconque des revendications précédentes, **caractérisé en ce que**, lors de la détermination de la première valeur de calcul, des paramètres concernant une prochaine fin de voie de circulation, notamment par une reconnaissance de panneau de signalisation ou un système de navigation, sont pris en considération.

6. Procédé selon l'une quelconque des revendications précédentes, **caractérisé en ce qu'**avant la détermination de la première valeur de calcul, au moins un critère d'exclusion d'une intention de changement de voie est pris en considération.

7. Procédé selon la revendication 6, **caractérisé en ce que** le critère est déterminé à partir des données d'un système de navigation.

8. Procédé selon l'une quelconque des revendications précédentes, **caractérisé en ce que** la seconde valeur de calcul est déterminée en vérifiant plusieurs trajectoires de changement de voie.

9. Procédé selon l'une quelconque des revendications précédentes, **caractérisé en ce que**, lors de la détermination de la seconde valeur de calcul, des paramètres relatifs à la position et au déplacement d'autres usagers de la route sont pris en considération.

10. Procédé selon la revendication 9, **caractérisé en ce que** le temps restant avant une collision entre un autre usager de la route et le propre véhicule automobile et/ou l'intervalle temporel entre un autre usager de la route et le propre véhicule et/ou au moins une modification temporelle de ces grandeurs pour tous les usagers de la route sont déterminés au sein d'un certain environnement du propre véhicule automobile pour toutes les trajectoires de changement de voie possibles comme seconds paramètres.

11. Procédé selon l'une quelconque des revendications précédentes, **caractérisé en ce que**, lors de la détermination de la seconde valeur de calcul, une limite supérieure pour la durée du changement de voie et/ou les accélérations transversales se produisant est prise en considération.

12. Procédé selon l'une quelconque des revendications précédentes, **caractérisé en ce que** la seconde valeur de calcul est déterminée en continu pendant le dépassement de la première valeur de calcul, de préférence en recourant aux informations des déterminations passées.

13. Procédé selon l'une quelconque des revendications précédentes, **caractérisé en ce que** la possibilité d'un changement de voie est indiquée au conducteur de manière haptique, optique et/ou acoustique.

14. Procédé selon l'une quelconque des revendications précédentes, **caractérisé en ce que** la possibilité d'un changement de voie n'est indiqué que tant que la seconde valeur de calcul reste au-dessus de sa valeur seuil.

15. Véhicule automobile doté d'un système de guidage longitudinal, **caractérisé en ce que** le système de guidage longitudinal est réalisé pour l'exécution du procédé selon l'une quelconque des revendications 1 à
